# NOUVEAU FASCICULE DE BREVET EUROPEEN

(11) **EP 2 626 177 B2**
(45) Date de publication et mention de la décision concernant l'opposition: **22.05.2019**
(45) Mention de la délivrance du brevet: 20.05.2015
(21) Numéro de dépôt: 13153974.4
(22) Date de dépôt: 05.02.2013
(51) Int. Cl.: B25J 15/00, B29C 49/42

(54) **Organe de préhension de récipients comportant un nez démontable équipé d'un mandrin et d'un plateau d'éjection**
Organ zum Greifen von Behältern, das mit einer abmontierbaren Nase mit einem Dorn und einer Auswurfplatte ausgestattet ist
Vessel gripping member comprising a removable nose equipped with a mandrel and an ejection plate

(30) Priorité: 08.02.2012 FR 1251155
(43) Date de publication de la demande: 14.08.2013
(73) Titulaire: SIDEL PARTICIPATIONS, 76930 Octeville-sur-Mer (FR)
(72) Inventeur: Duclos, Yves-Alban, 76930 OCTEVILLE SUR MER (FR); Cardine, Denis, 76930 OCTEVILLE SUR MER (FR)
(74) Mandataire: Gevers & Orès

(56) Documents cités:
- WO-A2-2009/018952
- WO-A2-2011/001358
- FR-A1- 2 792 569
- FR-A1- 2 957 904
- US-A- 4 487 568
- US-B1- 6 761 556

## Description

L'invention concerne un organe de préhension de récipients.

L'invention concerne un organe de préhension de récipient qui comporte :
- un support mobile le long d'une trajectoire de transport du récipient ;
- un nez comportant un mandrin susceptible de saisir un col du récipient, le nez étant fixé de manière démontable à une extrémité axiale inférieure du support.

De tels organes de préhension de récipient sont connus des documents WO-A- 2011 00 1358, FR-A-2 957 904 et FR-A-2 792 569.

L'invention concerne aussi un dispositif de remplacement des nez de tels organes de préhension.

De tels organes de préhension sont communément utilisés dans les installations de convoyage de récipients, en particulier pour convoyer des préformes thermoplastiques au travers d'un four.

De telles préformes sont obtenues généralement par injection et présentent un corps cylindrique tubulaire fermé à l'une de ses extrémités axiales, et qui est prolongé à son autre extrémité par un col, lui aussi tubulaire. Le col est généralement injecté de manière à posséder déjà sa forme définitive tandis que le corps de la préforme est appelé à subir une déformation relativement importante pour former le récipient final suite à une opération de soufflage.

Le col de la préforme présente souvent une collerette d'appui coopérant avec une pince de préhension ou avec un rail de guidage. Le bord aminci à l'extrémité axiale ouvert du col s'appelle le "buvant" du récipient. La distance axiale entre l'extrémité du buvant et le dessous de la collerette est généralement une distance très précise car elle sert pour le bouchon de fermeture du récipient.

L'opération de soufflage du corps de la préforme nécessite que celui-ci soit porté à une température supérieure à la température de transition vitreuse du matériau. On procède à un conditionnement thermique de la préforme en la faisant circuler à l'intérieur d'un four. Le four comporte des moyens de chauffage qui sont par exemple formés par des lampes à infrarouge dans lesquelles la préforme est déplacée par un système de convoyage.

Les organes de préhension destinés à des systèmes de convoyage traversant un four ne sont généralement pas de simples pinces de serrage car l'organe de préhension doit permettre d'entraîner l'objet en rotation autour d'un axe.

En fin de parcours, le mandrin doit pouvoir être retiré de la préforme afin que cette dernière puisse être transférée à un poste de soufflage. Une telle opération est connue sous le terme "dévêtissage".

Plusieurs solutions sont connues pour dévêtir une préforme. L'une d'elles consiste à agencer un plateau d'éjection au-dessus de chaque mandrin. Le mandrin est susceptible d'être rétracté axialement dans un orifice central du plateau. Le buvant de la préforme bute alors contre le plateau. Le plateau empêche alors le coulissement axial de la préforme, ce qui provoque le retrait du mandrin du col de la préforme.

Une telle installation de fabrication de bouteilles en grandes séries est très onéreuse. Une même installation doit donc pouvoir être utilisée pour fabriquer les bouteilles de dimensions variées. Le diamètre des cols de préforme est notamment susceptible de varier selon le modèle de bouteille à fabriquer.

Pour permettre de saisir des cols de différents formats, il est connu de changer les mandrins sur les dispositifs de convoyage.

De plus, il est nécessaire de changer aussi les plateaux d'éjection car le diamètre de leur orifice central n'est pas adapté à toutes les dimensions de col. Un orifice central un peu trop grand par rapport au diamètre du col peut en effet provoquer le basculement de la préforme. A cet effet un usage antérieur de la société Krones AG concerne un organe de préhension de récipient conforme au préambule de la revendication 1.

Cependant, les opérations de changement des plateaux d'éjection et des mandrins sont une opération fastidieuse qui requiert d'arrêter l'installation pendant un long moment.

Pour résoudre notamment ce problème, l'invention propose un organe de préhension conforme à la revendication 1.

Selon d'autres caractéristiques de l'organe de préhension :
- les moyens de verrouillage comportent un élément de commande qui est monté coulissant axialement dans le nez entre une position inférieure de verrouillage des éléments de fixation en position de fixation, vers laquelle il est rappelé élastiquement, et une position supérieure de déverrouillage dans laquelle le nez est susceptible d'être déplacé axialement par rapport au support ;
- les éléments de fixation sont portés par le nez, l'élément de commande agissant sur une rampe qui pousse les éléments de fixation vers leur position de fixation lorsque l'élément de commande est rappelé vers sa position de verrouillage ;
- l'élément commande est une tige de poussée qui est agencée concentriquement à l'intérieur du mandrin de manière qu'une extrémité inférieure libre d'appui de la tige de poussée soit accessible par un orifice concentrique débouchant sous le mandrin ;
- le plateau d'éjection est rappelé élastiquement vers sa position de vêtissage ;
- le plateau d'éjection est commandé vers sa position de dévêtissage par butée d'une face du plateau contre une face coulissante axialement par rapport au support.

L'invention concerne aussi un dispositif de remplacement des nez de tels organes de préhension, **caractérisé en ce qu'il** comporte :
- une pince comportant au moins un mors mobile qui est commandé entre une position fermée de serrage simultané de chaque nez et une position ouverte de relâchement simultané de chaque nez ;
- des moyens d'actionnement comportant des pions d'appui mobiles simultanément dont chacun est associé à un nez et qui sont commandés entre une position d'appui simultané des éléments de commande de chaque nez et une position de retrait simultané dans laquelle les éléments de commande associés ne sont pas sollicités.

Selon d'autres caractéristiques du dispositif de remplacement :
- le déplacement des pions d'appui est lié aux mouvements du mors mobile de la pince de manière que les pions d'appui atteignent leur position d'appui uniquement lorsque la pince est dans sa position fermée ;
- le mouvement du mors mobile de la pince est entraîné par le déplacement des pions d'appui ;
- les mouvements des pions d'appui et du mors mobile sont liés par l'intermédiaire d'un système de came ;
- le dispositif de remplacement est commandé manuellement ;
- le dispositif de remplacement est commandé automatiquement.

D'autres caractéristiques et avantages de l'invention apparaîtront au cours de la lecture de la description détaillée qui va suivre pour la compréhension de laquelle on se reportera aux dessins annexés parmi lesquels :
- la figure 1 est une vue de dessus qui représente schématiquement une installation de fabrication de récipients en matériau thermoplastique ;
- la figure 2 est une vue en coupe axiale qui représente un maillon d'une chaîne de convoyage de préforme qui est équipé de deux organes de préhension réalisés selon les enseignements de l'invention ;
- la figure 3 est une vue en coupe axiale qui représente un nez de l'organe de préhension de la figure 2 ;
- la figure 4 est une vue similaire à celle de la figure 2 qui représente deux maillons équipés chacun de deux organes de préhension, les deux organes de préhension de gauche comportant un plateau d'éjection en position de vêtissage et les deux organes de préhension de droite comportant un plateau d'éjection en position de dévêtissage ;
- la figure 5 est une vue en coupe selon le plan de coupe 5-5 de la figure 3 qui représente les moyens de fixation à billes du nez sur le support ;
- la figure 6 est une vue en perspective qui représente le nez de la figure 3 ;
- la figure 7 est une vue en perspective qui représente un dispositif de remplacement de plusieurs nez simultanément ;
- la figure 8 est une vue en coupe selon le plan de coupe 8-8 de la figure 10 qui représente le dispositif de remplacement dans une position ouverte ;
- la figure 9 est une vue similaire à celle de la figure 8 qui représente le dispositif de remplacement dans une position fermée ;
- la figure 10 est une vue en coupe selon le plan de coupe 10-10 de la figure 8 qui représente une pince du dispositif de remplacement en position ouverte ;
- la figure 11 est une vue similaire à celle de la figure 10 qui représente la pince en position fermée ;
- la figure 12 est une vue en coupe transversale selon le plan de coupe 12-12 de la figure 7 qui représente les pions d'appui en position de retrait ;
- la figure 13 est une vue similaire à celle de la figure 12 qui représente les pions d'appui en position d'appui.

Dans la suite de la description, on adoptera de manière non limitative des orientations :
- longitudinale indiquée par la flèche "L" des figures et orientée d'arrière en avant ;
- verticale indiquée par la flèche "V" des figures et orientée de bas en haut ;
- transversale indiquée par la flèche "T" des figures et orientée de gauche à droite.

La direction verticale est utilisée comme un repère géométrique arbitraire indépendant de la direction de la gravité.

Dans la suite de la description, des éléments présentant des structures identiques ou des fonctions analogues seront désignés par des mêmes numéros de référence.

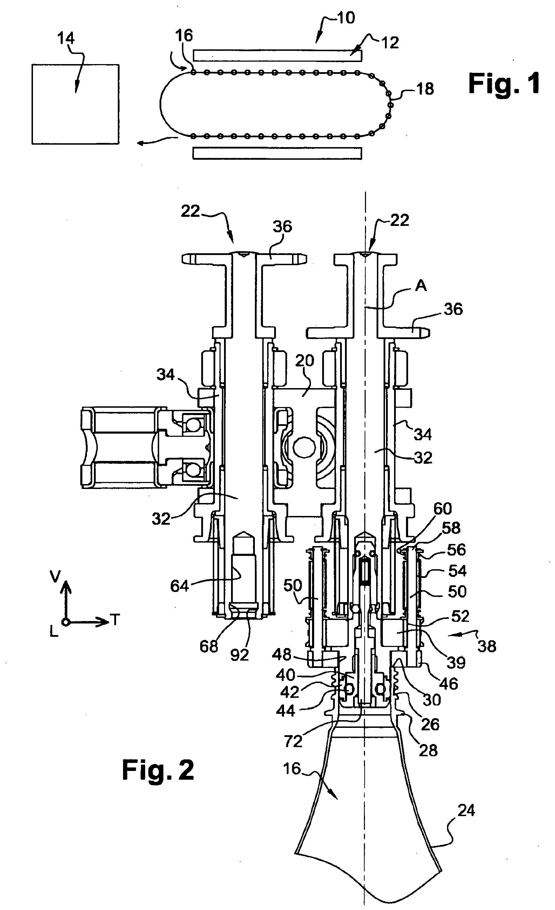

On a représenté schématiquement à la figure 1 une installation 10 de fabrication de récipients tels que des bouteilles en matériau thermoplastique. Une telle installation 10 comporte un four 12 de conditionnement thermique et un poste 14 de soufflage ou d'étirage-soufflage.

Des récipients, qui sont ici des préformes 16, sont destinées à défiler dans le four 12 de conditionnement avant d'être transférées l'une après l'autre au poste 14 de soufflage. Le défilement des préformes 16 dans le four 12 est effectué au moyen d'une chaîne 18 de convoyage formant une boucle fermée.

Comme représenté à la figure 2, la chaîne 18 de convoyage est formée par l'articulation de maillons 20. Chaque maillon 20 comporte au moins un organe 22 de préhension d'une préforme 16. Chaque maillon 20 porte ici deux organes 22 de préhension. La chaîne 18 comporte de nombreux maillons 20 et de nombreux organes 22 de préhension. Tous les organes 22 de préhension étant sensiblement identiques, un seul de ces organes 22 de préhension sera décrit par la suite.

Une préforme 16 comporte un corps 24 qui est ouvert vers le haut par l'intermédiaire d'un col 26. Le col est délimité vers le bas par une collerette 28 et vers le haut par un bord d'extrémité supérieur appelé "buvant 30".

L'organe 22 de préhension permet de saisir une préforme 16 par son col 26. De plus, l'organe 22 de préhension est susceptible d'entraîner la préforme 16 en rotation autour de son axe "A" vertical lors de son trajet à travers le four 12. Cette rotation permet d'assurer un chauffage homogène du corps de la préforme 16.

L'organe 22 de préhension représenté à la figure 2 comporte un support 32 qui est formé par un arbre d'axe "A" vertical qui est monté à rotation dans un palier 34 de guidage du maillon 20. Le support 32 comporte à son extrémité supérieure un pignon 36 qui est susceptible de coopérer avec une crémaillère (non représentée) qui est agencée le long de la trajectoire du maillon 20 pour entraîner le support 32 en rotation.

Le support 32 est ici reçu coulissant verticalement dans son palier 34 entre une position extrême inférieure et une position extrême supérieure.

L'organe 22 de préhension comporte en outre un nez 38 inférieur qui est fixé de manière démontable à une extrémité axiale inférieure du support 32. Le nez 38 est plus particulièrement fixe par rapport au support 32. A la figure 2, le support 32 de gauche est représenté sans son nez 38, tandis que le support 32 de droite est représenté équipé de son nez 38.

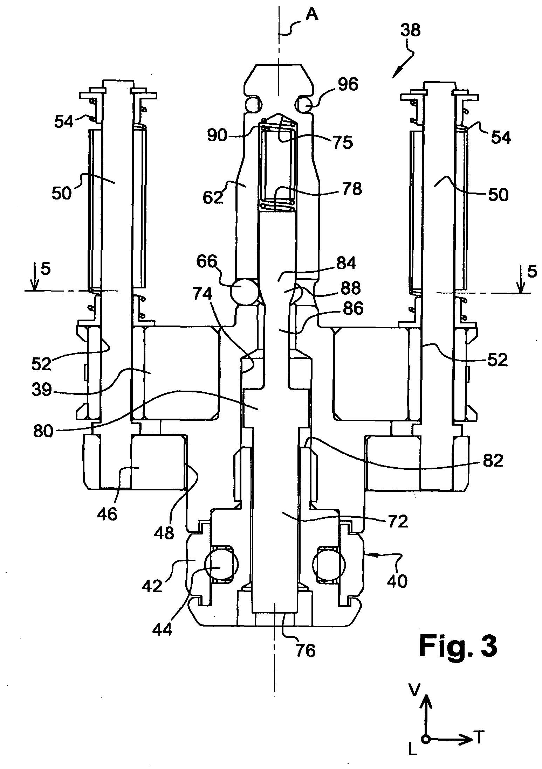

Le nez 38 est représenté plus en détails à la figure 3. Il comporte un corps 39 cylindrique qui comporte un mandrin 40 d'extrémité inférieure qui est agencé coaxialement à l'axe "A" de rotation. Le mandrin 40 est susceptible d'être inséré axialement dans le col 26 du récipient 16 pour saisir le récipient 16. Le mandrin 40 est plus particulièrement formé par au moins trois segments 42 qui sont agencés autour de l'axe "A" de rotation. Chaque segment 42 est poussé radialement vers l'extérieur dans une position expansé par un anneau 44 réalisé en un matériau élastomère. Ainsi, chaque segment 42 est susceptible d'être poussé radialement contre la paroi cylindrique interne du col 26 pour bloquer la préforme 16 par frottement.

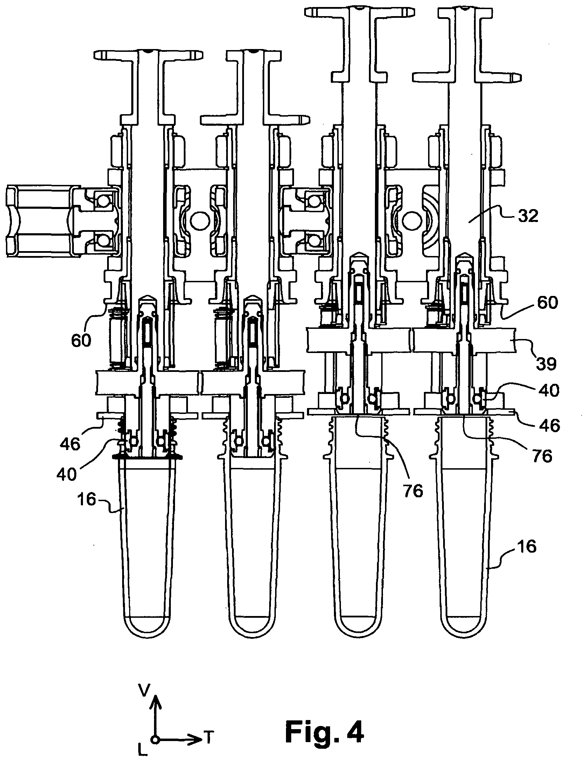

Le nez 38 comporte aussi un plateau 46 d'éjection qui présente une forme de disque radial. Un orifice 48 central du plateau 46 d'éjection est destiné à recevoir le mandrin 40. Le plateau 46 d'éjection est ainsi monté coulissant axialement autour du mandrin 40 entre :
- une position de vêtissage vers laquelle il est rappelé élastiquement et dans laquelle le mandrin 40 fait saillie axialement vers le bas, comme cela est illustré par le nez 38 de la figure 3 et par les deux dispositifs 22 situés à gauche de la figure 4 ; et
- une position de dévêtissage dans laquelle le mandrin 40 est rétracté axialement au-dessus du plateau 46 d'éjection, comme cela est illustré par les deux dispositifs 22 situés à droite de la figure 4.

Chaque plateau 46 d'éjection comporte deux colonnes 50 qui s'étendent verticalement vers le haut depuis la face supérieure du plateau 46. Chaque colonne 50 est fixe par rapport au plateau 46. Les colonnes 50 sont agencées de manière diamétralement opposée, radialement de part et d'autre du mandrin 40.

Chaque colonne 50 est reçue de manière coulissante axialement dans un orifice 52 de passage associé du corps 39 de nez 38 de manière que chaque colonne 50 fasse saillie verticalement au-dessus d'une face supérieure du corps 39.

Un moyen 54 de rappel élastique, ici un ressort hélicoïdal, est interposé entre une face 56 inférieure d'épaulement de l'extrémité 58 supérieure de chaque colonne 50et la face supérieure du corps 39 de nez 38. Le moyen 54 de rappel élastique permet ainsi de rappeler élastiquement le plateau 46 dans sa position de vêtissage.

L'extrémité supérieure de chaque colonne 50 est en outre susceptible de venir en butée contre une face 60 inférieure en vis-à-vis du maillon 20 lorsque le support 32 est commandé vers sa position extrême supérieure comme cela est illustré à la figure 4. Ainsi, le plateau 46 d'éjection est retenu par la face 60 de butée tandis que le mandrin 40 est rétracté dans sa position de dévêtissage.

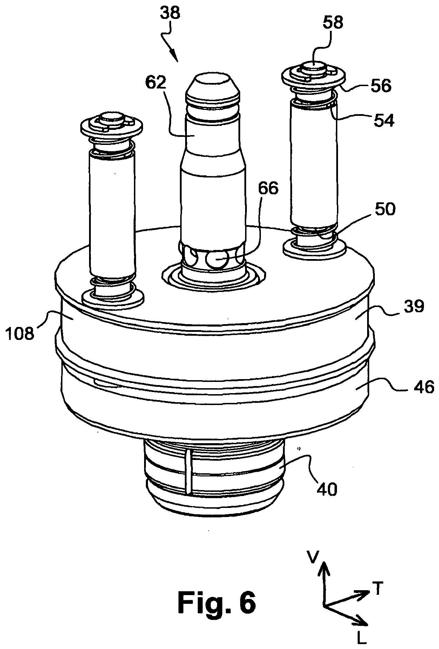

Les moyens de fixation démontables du nez 38 sur le support 32 ont été représentés plus en détail aux figures 3, 5 et 6. Ces moyens comportent un premier élément d'emboîtement du nez 38 qui est destiné à être emboîté axialement avec un deuxième élément d'emboîtement du support 32.

Le premier élément d'emboîtement est ici une broche 62 mâle qui s'étend verticalement vers le haut depuis la face supérieure du corps 39 de nez 38. La broche 62 est fixe par rapport au corps 39. La broche 62 est plus précisément agencée coaxialement à l'axe "A" de rotation du support 32.

Comme représenté à la figure 2, le deuxième élément d'emboîtement est formé par un orifice 64 d'axe "A" débouchant en bout inférieur du support 32. L'orifice 64 d'emboîtement présente une forme complémentaire de celle de la broche 62.

Les moyens de fixation comportent en outre des éléments 66 de fixation qui sont montés coulissant radialement dans la broche 62. Les éléments de 66 de fixation sont ainsi portés par le nez 38 .

Chaque élément 66 de fixation est susceptible d'être reçu partiellement dans une cavité 68 complémentaire qui est réalisée dans la paroi interne de l'orifice 64 d'emboîtement. La cavité 68 est ici formée par une gorge.

Les éléments 66 de fixation sont ici formés par des billes dont chacune est emprisonnée dans un logement 70 qui est réalisé dans la paroi de la broche 62. Le logement 70 est débouchant radialement vers l'extérieur de manière que chaque élément 66 de fixation puisse coulisser radialement entre
- une position de fixation dans laquelle les éléments 66 de fixation sont expansés radialement en faisant saillie radialement vers l'extérieur de manière à être reçus dans la cavité 68 du support 32 ;
- et une position de libération, dans laquelle les éléments 66 de fixation sont rétractés à l'intérieur de la broche 62 pour permettre le coulissement axial du nez 38 par rapport au support 32.

Le nez 38 comporte aussi des moyens de verrouillage des éléments 66 de fixation dans leur position de fixation. Les moyens de verrouillage comportent un élément 72 de commande qui est monté coulissant axialement dans le nez 38. L'élément 72 de commande est plus particulièrement formé par une tige 72 de poussée d'axe vertical qui est agencée coaxialement à l'axe "A" de rotation.

A cet effet, le mandrin 40 et le corps 39 comportent un orifice 74 cylindrique axial concentrique débouchant vers le bas et délimité vers le haut par un fond 75 supérieur. Le fond 75 est agencé axialement au-dessus des éléments 66 de fixation. L'élément 72 de commande forme ainsi une tige de poussée qui est agencée concentriquement à l'intérieur du mandrin 40.

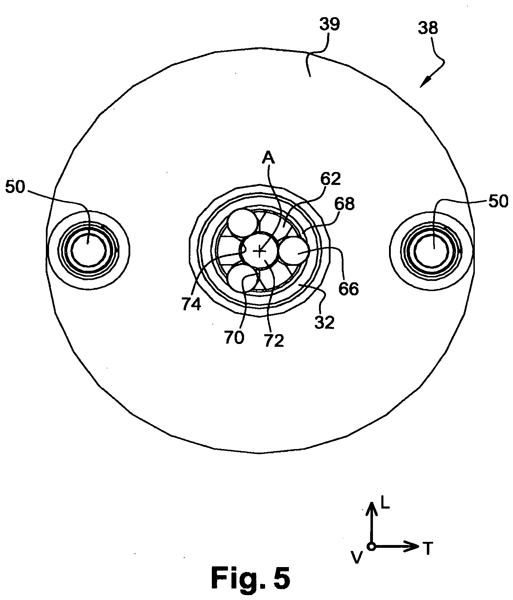

Les logements 70 des éléments 66 de fixation débouchent radialement dans l'orifice 74 central. Ainsi, dans leur position de libération, les éléments 66 de fixation font saillie radialement vers l'intérieur de l'orifice 74 tandis qu'en position de fixation, les éléments 66 de fixation affleurent à la face cylindrique interne de l'orifice 74 central, comme cela est illustré aux figures 3 et 5.

La tige 72 de poussée comporte une première extrémité 76 inférieure libre et une deuxième extrémité 78 supérieure libre.

La tige 72 de poussée comporte aussi un collet 80 qui est destiné à empêcher le retrait axial de la tige 72 de poussée de l'orifice 74. Le collet 80 est destiné à venir en butée contre une face 82 d'épaulement de l'orifice 74 central qui est orientée verticalement vers le haut qui est fixe par rapport au corps 39. La face 82 d'épaulement est agencée verticalement au-dessous des éléments 66 de fixation. Dans l'exemple représenté aux figures, la face 82 est agencée dans le corps 39.

La tige 72 de poussée comporte aussi un tronçon 84 de verrouillage des éléments 66 de fixation dans leur position de fixation, et un tronçon 86 de libération des éléments 66 de fixation.

Le tronçon 84 de verrouillage présente un diamètre sensiblement égal au diamètre de l'orifice 74 au niveau des éléments 66 de fixation. Ainsi, le tronçon 84 de verrouillage empêche le coulissement radial des éléments 66 de fixation vers leur position rétractée.

Le tronçon 86 de libération présente au contraire un diamètre sensiblement inférieur au diamètre de l'orifice 74 au niveau des éléments 66 de fixation de manière que les éléments 66 de fixation puissent être rétractés à l'intérieur de leur logement 70.

Le tronçon 86 de libération est agencé axialement au-dessous du tronçon de verrouillage et au-dessus du collet 80.

Un tronçon 88 de transition entre le tronçon 84 de verrouillage et le tronçon 86 de libération présente une forme conique de manière à former une pente susceptible de pousser les éléments 66 de fixation vers leur position de fixation lors du coulissement vers le bas de la tige 72 de poussée.

Un moyen 90 de rappel élastique, ici un ressort hélicoïdal, est interposé entre le fond 75 et l'extrémité 78 supérieure de la tige 72 de poussée.

La tige 72 de poussée est ainsi monté coulissante dans le nez 38 entre :
- une position inférieure de verrouillage des éléments de fixation en position de fixation, vers laquelle il est rappelé élastiquement par le moyen 90 de rappel élastique, et
- une position supérieure de déverrouillage dans laquelle le nez 38 est susceptible d'être déplacé axialement par rapport au support 32.

La tige 72 de poussée agit ainsi sur le tronçon 88 de transition en forme de rampe qui pousse radialement les éléments 66 de serrage vers leur position de fixation lorsque La tige 72 de poussée est rappelée vers sa position de verrouillage.

Pour faciliter le retrait du nez 38 du support 32, la cavité 68 comporte à son extrémité inférieure une rampe 92 qui est susceptible de faire coulisser les éléments 66 de fixation vers leur position de libération lors du retrait axial du nez 38 par rapport au support 32.

La tige 72 de poussée est agencée dans le mandrin 40 de manière que son extrémité 76 inférieure libre d'appui soit accessible par l'orifice 74 concentrique débouchant sous le mandrin 40. Il est ainsi possible de solliciter verticalement vers le haut l'extrémité 76 inférieure de la tige 72 de poussée pour faire coulisser la tige 72 de poussée vers sa position de déverrouillage.

L'extrémité 76 d'appui de la tige 72 de poussée est agencée de manière à ne pas dépasser axialement vers le bas par rapport à la face inférieure du mandrin 40 lorsque la tige 72 de poussée occupe sa position de verrouillage. Ceci permet notamment d'éviter que le nez 38 ne soit déverrouillé accidentellement, par exemple lorsque la face inférieure du mandrin 40 vient en butée contre le buvant 30 de la préforme 16 en cas de dysfonctionnement.

L'extrémité inférieure de l'orifice 74 concentrique du mandrin 40 présente un diamètre supérieur à celui de la tige 72 de poussée. Ceci permet de faciliter l'insertion d'un pion94 de déverrouillage, comme cela sera expliqué plus en détail par la suite.

L'extrémité supérieure de la broche 62 comporte aussi des moyens pour rendre le nez 38 solidaire en rotation autour de l'axe "A" avec le support 32.

Dans le mode de réalisation représenté à la figure 3, la broche 62 comporte un anneau 96 en matériau élastomère qui est destiné à être coincé radialement entre la broche 62 et la paroi cylindrique interne de l'orifice 64 d'emboîtement. Ceci permet d'entraîner le nez 38 en rotation par frottement.

Cet anneau 96 permet en outre de caler radialement la broche 62 dans l'orifice 64 d'emboîtement de manière à éviter des mouvements de basculement du nez 38 par rapport au support 32.

Selon un mode de réalisation non représenté de l'invention, l'extrémité supérieure libre de la broche présente un profil non circulaire qui est destiné à coopérer avec un tronçon d'extrémité supérieur de forme complémentaire de l'orifice d'emboîtement pour bloquer la rotation de la broche par rapport au support.

Lors du démontage d'un nez 38, l'extrémité 76 inférieure de la tige 72 de poussée est sollicitée vers le haut à l'encontre de la force de rappel élastique. Le tronçon 86 de libération est ainsi amené au niveau des éléments 66 de fixation. Le nez 38 est ensuite tiré vers le bas de manière que les éléments 66 de fixation soient poussés radialement vers l'intérieur vers leur position de libération par contact avec la rampe 92 de la cavité 68.

Un nouveau nez 38 peut alors être monté sur le support 32. L'extrémité 76 inférieure de la tige 72 de poussée est sollicitée vers le haut pour faire coulisser le tronçon 86 de libération au niveau des éléments 66 de fixation. La broche 62 est alors insérée verticalement vers le haut dans l'orifice 64 d'emboîtement, et les éléments 66 de fixation peuvent être poussés vers le position de libération par contact avec le bord inférieur de l'orifice 64 d'emboîtement.

Lorsque le nez 38 est en butée contre le support 32, la tige 72 de poussée est relâchée de manière à être rappelée élastiquement vers sa position de verrouillage. Le tronçon 88 de transition pousse les éléments 66 de fixation vers leur position de fixation, puis le tronçon 84 de verrouillage bloque les éléments 66 de fixation dans leur position de fixation.

Les éléments 66 de fixation coopèrent alors avec la cavité 68 pour bloquer le nez 38 dans sa position montée.

Avantageusement, les éléments 66 de fixation sont en appui sur les rampes 92 associées de manière à plaquer le nez 38 verticalement vers le haut contre le support 32.

L'invention prévoit aussi un dispositif 98 de remplacement d'au moins un nez 38 de l'organe 22 de préhension. Avantageusement, pour raccourcir la durée de l'opération de remplacement des nez 38 de l'organe 22 de préhension, le dispositif 98 de remplacement permet de remplacer une pluralité de nez 38 simultanément, ici dix nez 38.

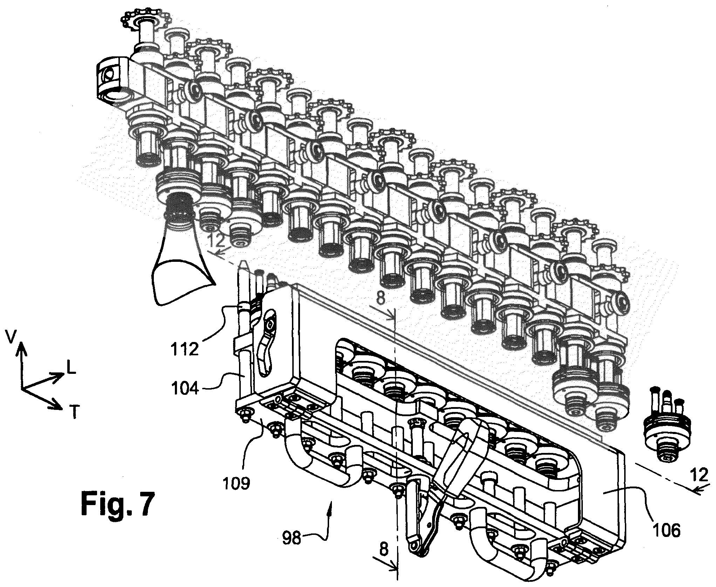

On comprendra bien sûr qu'un tel dispositif 98 de remplacement peut être adapté au remplacement d'un nombre quelconque de nez 38 en modifiant simplement le dispositif 98 présenté en exemple aux figures 7 et suivantes.

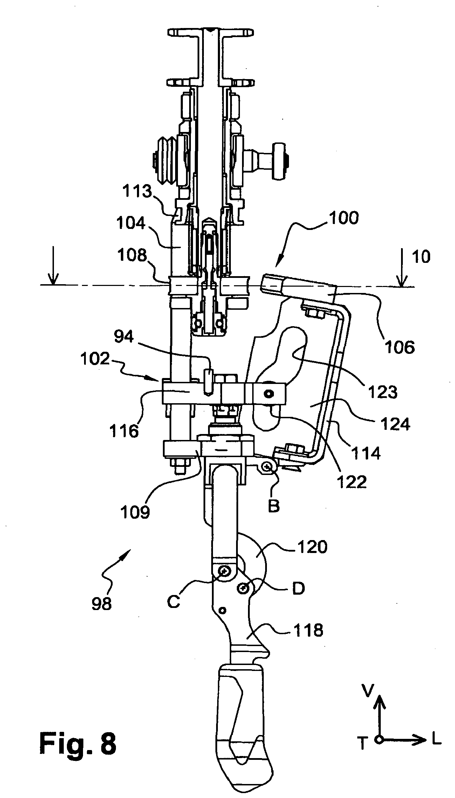

Le dispositif 98 de préhension comporte principalement :
- une pince 100 commune pour saisir simultanément les nez 38 qui est particulièrement visible aux figures 8 à 11 ;
- des moyens 102 d'actionnement des tiges 72 de poussée de chaque nez 38 vers leur position de libération qui sont particulièrement visibles aux figures 8, 9, 12 et 13.

La pince 100 comporte ici un mors 104 fixe et un mors 106 mobile longitudinalement qui est commandé entre une position fermée de serrage simultané de chaque nez 38 et une position ouverte de relâchement simultané de chaque nez 38.

La pince 100 est conçue de manière à saisir dix nez 38 adjacents alignés selon une ligne droite transversale. Une telle configuration se trouve le long d'une ligne droite de la chaîne 18.

Pour faciliter la préhension des nez 38, chaque nez 38 comporte ici une zone 108 de préhension qui est formée dans une paroi cylindrique externe du corps 39 de nez 38. La zone 108 de préhension est formée par un galbe concave de ladite paroi cylindrique.

Le mors fixe 104 comporte un carter 109transversal qui est destiné à être agencé au droit des mandrins 40 de chaque nez 38. Onze doigts 110 verticaux s'étendent depuis une face supérieure du carter 109 jusqu'à une extrémité 113 supérieure libre. Les doigts 110 sont alignés transversalement, avec un décalage longitudinal vers l'arrière par rapport au plan défini par les axes "A" de chaque nez 38.

Chaque doigt 110 est destiné à être reçu entre deux supports 32 de nez 38 adjacents. Les doigts 110 sont espacés d'une distance transversale qui est inférieure au diamètre du corps 39 de nez 38.

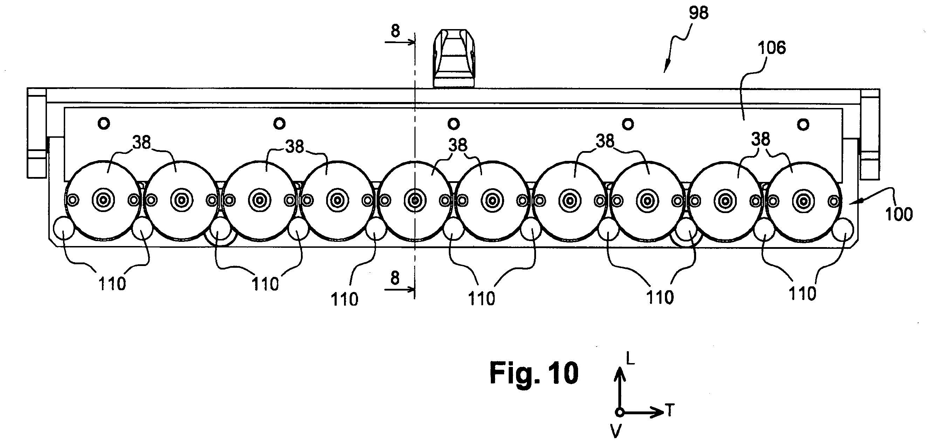

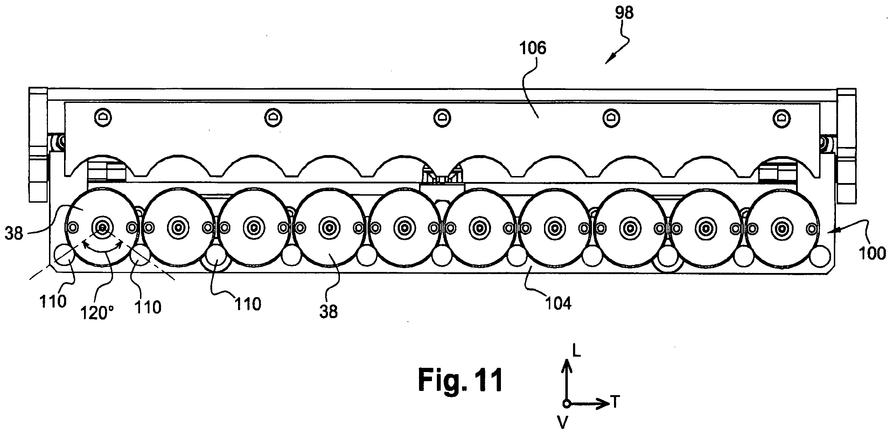

Chaque doigt 110 comporte un renflement 112 central qui présente une forme complémentaire de celle du galbe de la zone 108 des nez 38. Un tel renflement 112 est notamment visible à la figure 7. Ainsi, lorsque le mors 104 fixe est positionné pour la préhension des nez 38, chaque nez 38 est en contact avec deux doigts 110 avec un angle d'environ 120° l'un par rapport à l'autre comme cela est particulièrement visible aux figures 10 et 11.

L'extrémité libre 113 de chaque doigt 110 forme une face de référence pour faciliter le positionnement du dispositif 98 de remplacement par rapport aux nez 38 par contact avec une face fixe par rapport aux supports 32. Dans l'exemple représenté aux figures, cette face fixe est formée par une face inférieure des maillons 20.

Le mors 106 mobile est monté pivotant sur le carter 109 autour d'un axe "B" de pivotement longitudinal par l'intermédiaire d'un bras vertical 114. Le mors 106 présente dix encoches en arc de cercle dont chacune présente une forme complémentaire de la zone 108 de préhension du nez 38 associé. Le mors 106 mobile est agencé en opposition avec les doigts 110 par rapport aux nez 38.

Ainsi, le mors 106 mobile est susceptible de pivoter entre une position fermée dans laquelle il serre longitudinalement le corps 39 de nez 38 contre les doigts 110, comme cela est représenté à la figure 10, et une position ouverte dans laquelle il est écarté longitudinalement des nez 38, comme représenté à la figure 11.

La forme galbée de la zone 108 de préhension permet de maintenir verticalement le nez 38 par rapport aux mors 104, 106 en position fermée.

Les moyens 102 d'actionnement comportent dix pions 94 d'appui qui sont mobiles entre une position supérieure d'appui simultané des tiges 72 de poussée de chaque nez 38, et une position inférieure de retrait simultané dans laquelle la tige 72 de poussée n'est pas sollicitée.

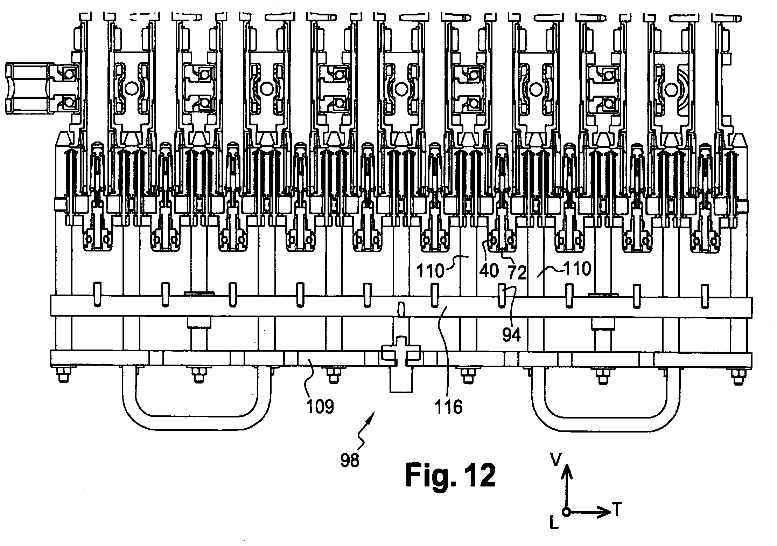

Pour ce faire, les pions 94 sont fixés à une traverse 116 commune, comme illustré à la figure 12. Chaque pion 94 s'étend verticalement vers le haut depuis une face supérieure de la traverse 116. Les pions 94 sont agencés selon un alignement transversal, chacun en coïncidence avec une extrémité 76 d'appui de la tige 72 de poussée du nez 38 associé.

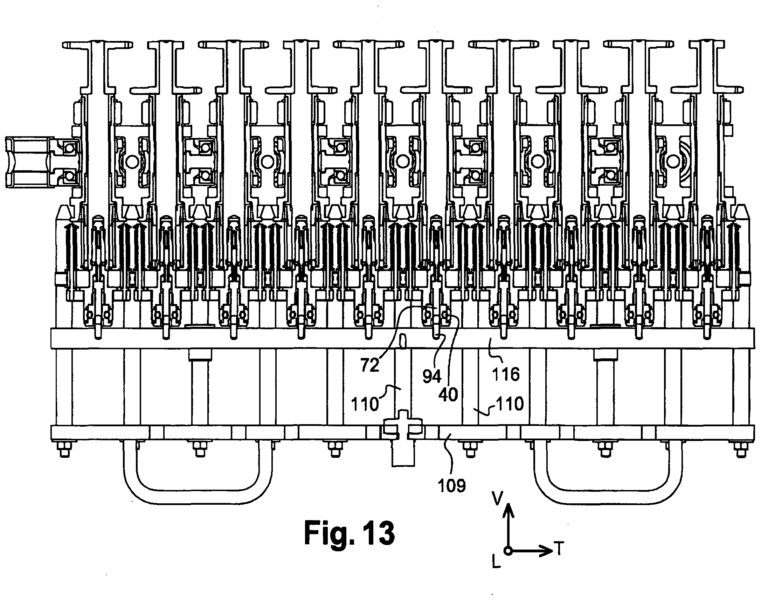

La traverse 116 est montée coulissante par rapport au carter 109 entre la position inférieure de retrait des pions 94, comme illustré à la figure 12 et la position supérieure d'appui des pions 94, comme illustré à la figure 13. La traverse 116 est guidée en coulissement par un tronçon inférieur des doigts 110. A cet effet, la traverse comporte des orifices de passage des doigts 110.

Le déplacement de la traverse 116 est lié aux mouvements du mors 106 mobile de manière que les pions 94 atteignent leur position d'appui uniquement lorsque le mors 106 mobile est dans sa position fermée.

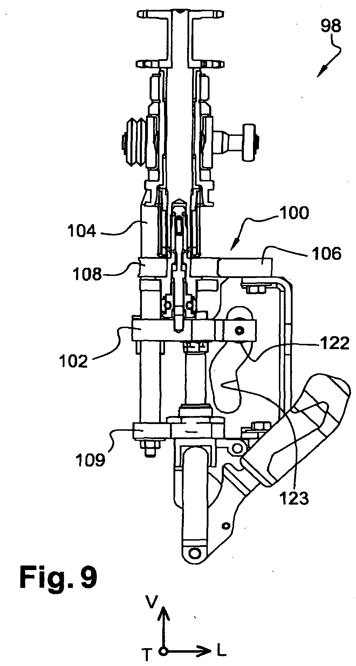

Dans l'exemple représenté aux figures, le mouvement du mors 106 mobile de la pince 100 est entraîné par le coulissement des pions 94 d'appui. A cet effet, les mouvements des pions 94 d'appui et du mors 106 mobile sont liés par l'intermédiaire d'un système de came, comme cela est illustré aux figures 8 et 9.

Le coulissement de la traverse 106 est commandé par un levier 118 qui est monté pivotant autour d'un axe transversal "C" sur le carter 109 par l'une de ses extrémités libres. Une portion intermédiaire du levier 118 est reliée à la traverse 116 par l'intermédiaire d'une bielle 120 de manière que le pivotement du levier provoque le coulissement de la traverse 116.

La traverse 116 comporte à chacune de ses extrémités transversale une came 122 qui est ici formée par un galet rotatif. Chaque came 122 est reçue dans une lumière 123 associée qui est réalisée dans des flancs 124 d'extrémité transversal du mors 106 mobile. La lumière 123 présente une forme telle que :
- le mors 106 mobile est commandé vers sa position fermée lorsque la traverse 116 coulisse vers sa position d'appui, comme représenté à la figure 9, et
- le mors 106 mobile est commandé vers sa position ouverte lorsque la traverse 116 coulisse vers sa position de retrait, comme représenté à la figure 8.

Ainsi, les pions 94 libèrent les nez 38 uniquement lorsque les nez 38 ont été effectivement saisis par la pince 100.

L'organe 22 de préhension et le dispositif 98 de remplacement réalisés selon les enseignements de l'invention garantissent ainsi un remplacement rapide du mandrin 40 ainsi que du plateau 46 d'éjection pour chaque organe 22 de préhension.

De plus, on a décrit un dispositif 98 de remplacement positionné et actionné manuellement.

On comprendra cependant que le dispositif 98 de remplacement peut avantageusement être automatisé. En ce cas, le dispositif 98 est porté et positionné par un bras robotisé (non représenté). L'actionnement du levier 118 est alors avantageusement motorisé.

## Revendications

1. Organe (22) de préhension de récipient (16) qui comporte :
- un support (32) mobile le long d'une trajectoire de transport du récipient (16) ;
- un nez (38) comportant un mandrin(40) susceptible de saisir dans un col (26) du récipient (16), le nez (38) étant fixé de manière démontable à une extrémité axiale inférieure du support (32) et le nez (38) comportant un plateau (46) d'éjection qui est monté coulissant axialement autour du mandrin (40) entre une position de vêtissage et dans laquelle le mandrin (40) fait saillie axialement vers le bas et une position de dévêtissage dans laquelle le mandrin (40) est rétracté axialement au-dessus d'une face inférieure du plateau (46) ;
**caractérisé en ce que** le nez (38) est fixé axialement au support (32) par coulissement radial d'éléments (66) de fixation entre une position de fixation et une position de libération, le nez (38) comportant des moyens commandés de verrouillage des éléments (66) de fixation dans leur position de fixation.

2. Organe (22) selon la revendication précédente, **caractérisé en ce que** les moyens de verrouillage comportent un élément (72) de commande qui est monté coulissant axialement dans le nez (38) entre une position inférieure de verrouillage des éléments (66) de fixation en position de fixation, vers laquelle il est rappelé élastiquement, et une position supérieure de déverrouillage dans laquelle le nez (38) est susceptible d'être déplacé axialement par rapport au support (32).

3. Organe (22) selon la revendication précédente, **caractérisé en ce que** les éléments (66) de fixation sont portés par le nez (38), et **en ce que** l'élément (72) de commande agit sur une rampe (86) qui pousse les éléments (66) de fixation vers leur position de fixation lorsque l'élément (72) de commande est rappelé vers sa position de verrouillage.

4. Organe (22) selon la revendication précédente, **caractérisé en ce que** l'élément (72) commande est une tige (72) de poussée qui est agencée concentriquement à l'intérieur du mandrin (40) de manière qu'une extrémité (76) inférieure libre d'appui de la tige (72) de poussée soit accessible par un orifice (74) concentrique débouchant sous le mandrin (40).

5. Organe (22) selon l'une quelconque des revendications précédentes, **caractérisé en ce que** le plateau (46) d'éjection est rappelé élastiquement vers sa position de vêtissage.

6. Organe (22) selon l'une quelconque des revendications précédentes, **caractérisé en ce que** le plateau (46) d'éjection est commandé vers sa position de dévêtissage par butée d'une face (50) du plateau (46) contre une face (60) coulissante axialement par rapport au support (32).

7. Dispositif (98) de remplacement d'au moins deux nez (38) d'un organe (22) de préhension selon l'une quelconque des revendications précédentes, **caractérisé en ce qu'**il comporte :
- une pince (100) comportant au moins un mors (106) mobile qui est commandé entre une position fermée de serrage simultané de chaque nez (38) et une position ouverte de relâchement simultané de chaque nez (38) ;
- des moyens (102) d'actionnement comportant des pions (94) d'appui mobiles simultanément dont chacun est associé à un nez (38) et qui sont commandés entre une position d'appui simultané des éléments (72) de commande de chaque nez (38) et une position de retrait simultané dans laquelle les éléments (72) de commande associés ne sont pas sollicités.

8. Dispositif (98) selon la revendication précédente, **caractérisé en ce que** le déplacement des pions (94) d'appui est lié aux mouvements du mors (106) mobile de la pince (100) de manière que les pions (94) d'appui atteignent leur position d'appui uniquement lorsque la pince (100) est dans sa position fermée.

9. Dispositif (98) selon la revendication précédente, **caractérisé en ce que** le mouvement du mors (106) mobile de la pince est entraîné par le déplacement des pions (94) d'appui.

10. Dispositif (98) selon la revendication précédente, **caractérisé en ce que** les mouvements des pions (94) d'appui et du mors (106) mobile sont liés par l'intermédiaire d'un système de came (122, 123).

11. Dispositif (98) selon l'une quelconque des revendications 7 à 10, **caractérisé en ce qu'**il est commandé manuellement.

12. Dispositif (98) selon l'une quelconque des revendications 7 à 10, **caractérisé en ce qu'**il est commandé automatiquement.

## Patentansprüche

1. Organ (22) zum Greifen eines Behälters (16), das umfasst:
- einen Träger (32), der längs einer Transportbahn des Behälters (16) beweglich ist;
- eine Nase (38), die einen Dorn (40) aufweist, der in einem Hals (26) des Behälters (16) aufgenommen werden kann, wobei die Nase (38) an einem unteren axialen Ende des Trägers (32) abnehmbar befestigt ist, und die Nase (38) eine Auswurfplatte (46) aufweist, die um den Dorn (40) zwischen einer Umhüllungsposition, in der der Dorn (40) axial nach unten vorsteht, und einer Freigabeposition, in der der Dorn (40) axial über eine untere Fläche der Platte (46) zurückgezogen ist, gleitend montiert ist ;
**dadurch gekennzeichnet, dass** die Nase (38) an dem Träger (32) durch radiales Gleiten von Befestigungselementen (66) zwischen einer Befestigungsposition und einer Freigabeposition axial befestigt wird, wobei die Nase (38) gesteuerte Mittel zum Verriegeln der Befestigungselemente (66) in ihrer Befestigungsposition umfasst.

2. Organ (22) nach dem vorhergehenden Anspruch, **dadurch gekennzeichnet, dass** die Verriegelungsmittel ein Steuerelement (72) umfassen, das in der Nase (38) zwischen einer unteren Verriegelungsposition der Befestigungselemente (66) in der Befestigungsposition, in die sie elastisch zurückgestellt sind, und einer oberen entriegelten Position, in der die Nase (38) in Bezug auf den Träger (32) axial verlagert werden kann, axial gleitend montiert ist.

3. Organ (22) nach dem vorhergehenden Anspruch, **dadurch gekennzeichnet, dass** die Befestigungselemente (66) durch die Nase (38) getragen werden und dass das Steuerelement (72) auf eine Rampe (86) einwirkt, die die Befestigungselemente (66) in ihre Befestigungsposition schiebt, wenn das Steuerelement (72) in seine Verriegelungsposition zurückgestellt ist.

4. Organ (22) nach dem vorhergehenden Anspruch, **dadurch gekennzeichnet, dass** das Steuerelement (72) ein Schubstift (72) ist, der konzentrisch in dem Dorn (40) in der Weise angeordnet ist, dass ein freies unteres Abstützende (76) des Schubstifts (72) durch eine konzentrische Öffnung (74), die unter dem Dorn (40) mündet, zugänglich ist.

5. Organ (22) nach einem der vorhergehenden Ansprüche, **dadurch gekennzeichnet, dass** die Auswurfplatte (46) in ihre Umhüllungsposition elastisch zurückgestellt wird.

6. Organ (22) nach einem der vorhergehenden Ansprüche, **dadurch gekennzeichnet, dass** die Auswurfplatte (46) durch Anschlagen einer Fläche (50) der Platte (46) an einer in Bezug auf den Träger (32) axial gleitenden Fläche (60) in ihre Freigabeposition gesteuert wird.

7. Vorrichtung (98) zum Austauschen wenigstens zweier Nasen (38) eines Greiforgans (22) nach einem der vorhergehenden Ansprüche, **dadurch gekennzeichnet, dass** sie Folgendes umfasst:
- eine Zange (100), die wenigstens eine bewegliche Backe (106) aufweist, die zwischen einer geschlossenen Position zum gleichzeitigen Klemmen jeder Nase (38) und einer offenen Position zum gleichzeitigen Freigeben jeder Nase (38) gesteuert wird;
- Betätigungsmittel (102), die gleichzeitig bewegliche Abstützhöcker (94) umfassen, wovon jeder einer Nase (38) zugeordnet ist und die zwischen einer Position zum gleichzeitigen Abstützen der Steuerelemente (72) jeder Nase (38) und einer Position des gleichzeitigen Zurückziehens, in der die zugeordneten Steuerelemente (72) nicht belastet sind, gesteuert werden.

8. Vorrichtung (98) nach dem vorhergehenden Anspruch, **dadurch gekennzeichnet, dass** die Verlagerung der Abstützhöcker (94) mit den Bewegungen der beweglichen Backe (106) der Zange (100) in Beziehung steht, derart, dass die Abstützhöcker (94) ihre Abstützposition ausschließlich dann erreichen, wenn die Zange (100) in ihrer geschlossenen Position ist.

9. Vorrichtung (98) nach dem vorhergehenden Anspruch, **dadurch gekennzeichnet, dass** die Bewegung der beweglichen Backe (106) der Zange durch die Verlagerung der Abstützhöcker (94) angetrieben wird.

10. Vorrichtung (98) nach dem vorhergehenden Anspruch, **dadurch gekennzeichnet, dass** die Bewegungen der Abstützhöcker (94) und der beweglichen Backe (106) über ein Nockensystem (122, 123) in Beziehung stehen.

11. Vorrichtung (98) nach einem der Ansprüche 7 bis 10, **dadurch gekennzeichnet, dass** sie manuell gesteuert wird.

12. Vorrichtung (98) nach einem der Ansprüche 7 bis 10, **dadurch gekennzeichnet, dass** sie automatisch gesteuert wird.

## Claims

1. Member (22) for gripping vessels (16) which comprises:
- a support (32) that moves along a transport trajectory of the vessel (16);
- a nose (38) comprising a mandrel (40) capable of holding in a neck (26) of the vessel (16), the nose (38) being fixed removably to a bottom axial end of the support (32) and the nose (38) comprising an ejection plate (46) which is mounted to slide axially around the mandrel (40) between a cladding position in which the mandrel (40) protrudes axially downwards and an uncladding position in which the mandrel (40) is axially retracted above a bottom face of the plate (46) ;
**characterized in that** the nose (38) is fixed axially to the support (32) by radial sliding of fixing elements (66) between a fixing position and a release position, the nose (38) comprising controlled means for locking the fixing elements (66) in their fixing position.

2. Member (22) according to the preceding claim, **characterized in that** the locking means comprise a control element (72) which is mounted to slide axially in the nose (38) between a bottom position locking the fixing elements (66) in the fixing position, towards which it is elastically returned, and an unlocking top position in which the nose (38) is capable of being displaced axially relative to the support (32).

3. Member (22) according to the preceding claim, **characterized in that** the fixing elements (66) are borne by the nose (38), and **in that** the control element (72) acts on a ramp (86) which thrusts the fixing elements (66) towards their fixing position when the control element (72) is returned towards its locking position.

4. Member (22) according to the preceding claim, **characterized in that** the control element (72) is a thrust rod (72) which is arranged concentrically inside the mandrel (40) such that a free bottom bearing end (76) of the thrust rod (72) is accessible through a concentric orifice (74) opening under the mandrel (40).

5. Member (22) according to any one of the preceding claims, **characterized in that** the ejection plate (46) is returned elastically towards its cladding position.

6. Member (22) according to any one of the preceding claims, **characterized in that** the ejection plate (46) is controlled towards its uncladding position by abutment of a face (50) of the plate (46) against a face (60) that slides axially relative to the support (32).

7. Device (98) for replacing at least two noses (38) of a gripping member (22) according to any one of the preceding claims, **characterized in that** it comprises:
- a clamp (100) comprising at least one moving jaw (106) which is controlled between a closed position simultaneously clamping each nose (38) and an open position simultaneously releasing each nose (38);
- actuation means (102) comprising bearing pins (94) that move simultaneously, each of which is associated with a nose (38) and which are controlled between a simultaneous bearing position of the control elements (72) of each nose (38) and a simultaneous removed position in which the associated control elements (72) are not stressed.

8. Device (98) according to the preceding claim, **characterized in that** the displacement of the bearing pins (94) is linked to the movements of the moving jaw (106) of the clamp (100) in such a way that the bearing pins (94) reach their bearing position only when the clamp (100) is in its closed position.

9. Device (98) according to the preceding claim, **characterized in that** the movement of the moving jaw (106) of the clamp is driven by the displacement of the bearing pins (94).

10. Device (98) according to the preceding claim, **characterized in that** the movements of the bearing pins (94) and of the moving jaw (106) are linked via a cam system (122, 123).

11. Device (98) according to any one of Claims 7 to 10, **characterized in that** it is controlled manually.

12. Device (98) according to any one of Claims 7 to 10, **characterized in that** it is controlled automatically.
